# EUROPÄISCHE PATENTSCHRIFT

(11) **EP 0 428 840 B1**
(45) Veröffentlichungstag und Bekanntmachung des Hinweises auf die Patenterteilung: **03.11.1993**
(21) Anmeldenummer: 90116955.7
(22) Anmeldetag: 04.09.1990
(51) Int. Cl.: B60G 3/20, B60G 15/12

(54) **Radaufhängung**
Wheel suspension
Suspension de roue

(30) Priorität: 20.11.1989 DE 3938475
(43) Veröffentlichungstag der Anmeldung: 29.05.1991
(73) Patentinhaber: Dr.Ing.h.c. F. Porsche Aktiengesellschaft, 70435 Stuttgart (DE)
(72) Erfinder: Sommerer, Karl, Dipl.-Ing. FH, D-7131 Wiernsheim (DE)

(56) Entgegenhaltungen:
- DE-A- 1 405 372
- GB-A- 921 908
- GB-A- 2 176 158
- US-A- 2 123 087

## Beschreibung

Die Erfindung bezieht sich auf eine Radaufhängung nach dem Oberbegriff des Anspruchs 1.

Es ist aus der GB-A-2 176 158 eine Radaufhängung gemäß dem Oberbegriff des Anspruchs 1, mit einem - in bezug auf die Raddrehachse - oberen und unteren Lenker bekannt, die am Radträger in Lagern angelenkt sind. Eine weitere Lagerung ist für den unteren Abstützpunkt des Federbeines am Radträger vorgesehen, der nach innen zur Fahrzeuglängsmittenachse hin verlagert ist. Eine Radschwenkung erfolgt über ein durch die Gelenke der beiden Radlenker verlaufende Schwenkachse, wobei der untere Abstützpunkt für das Federbein im Abstand zum unteren Lenkerpunkt angeordnet ist, was zu einer nachteiligen Momentenbildung bei einer Verschwenkung des Rades beiträgt.

Aufgabe der Erfindung ist es, eine Radaufhängung zu schaffen, die einen kleinen Störkrafthebelarm bei einer optimalen Dämpferübersetzung aufweist, bei der eine Aufteilung der Kräfte vom Federbein und vom unteren Radführungslenker erfolgt.

Diese Aufgabe wird erfindungsgemäß durch die kennzeichnenden Merkmale des Anspruchs 1 gelöst. Weitere vorteilhafte Merkmale beinhalten die Unteransprüche.

Die mit einer bevorzügten Ausbildung, der Erfindung hauptsächlich erzielten Vorteile bestehen darin, daß durch die Lage der radträgerseitigen Gelenkpunkte in der Felge des Fahrzeugrades eine große Stützbasis und somit ein optimales Dämpferverhältnis erzielt wird. Gemäß einer bevorzugten Ausbildung, ergeben die Lage der Gelenke nahe der senkrechten Radmittenlängsebene einen geringen Störkrafthebelarm, wozu die gemeinsam im Lagerelement des Radträgers angeordneten Gelenke für den unteren Lenker und das Federbein beitragen.

Diese Gelenke sind übereinander angeordnet im Radträger gehalten und liegen in einer durch das Gelenk des oberen Radführungsgliedes verlaufenden Radschwenkachse.

Das Gelenk des unteren Lenkers ist vorzugsweise als hängendes Gelenk ausgeführt und getrennt vom vorzugsweise stehenden Gelenk des Federbeines vorgesehen. Hierdurch ist das hängende Gelenk für den unteren Lenker frei von Federkräften und damit definierter auslegbar und sicherer. Außerdem kann der untere Lenker leichter gebaut werden, da er frei von Federkräften ist und nur als Zug- und Druckstrebe wirkt.

Ein Ausführungsbeispiel der Erfindung ist in der Zeichnung dargestellt und wird im folgenden näher beschrieben.

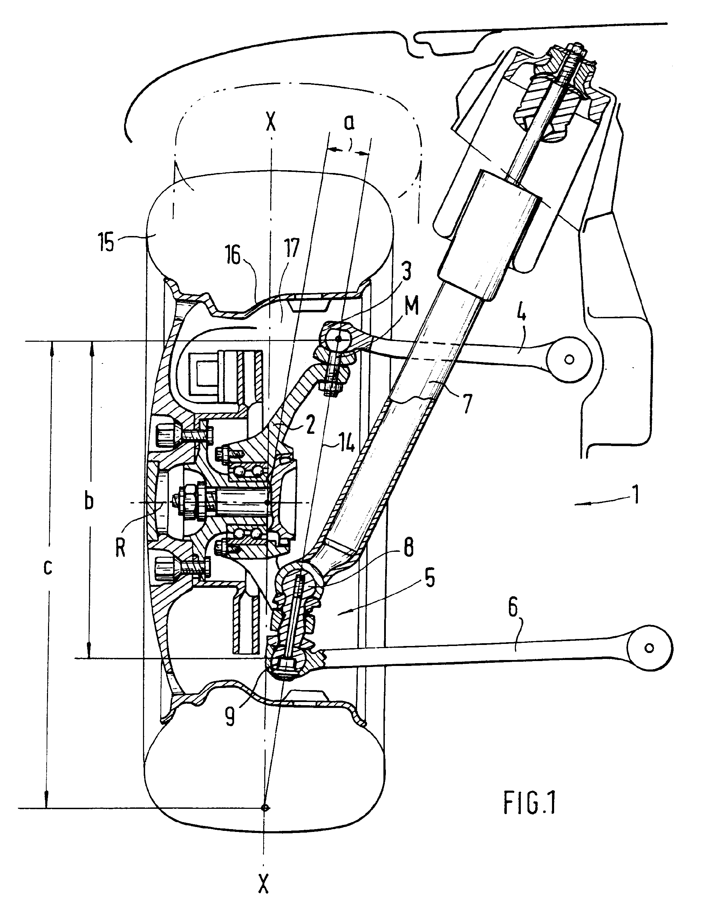

Es zeigen
- Fig. 1: eine Vorderansicht einer Radaufhängung mit zwei Querlenkern und einem Federbein und

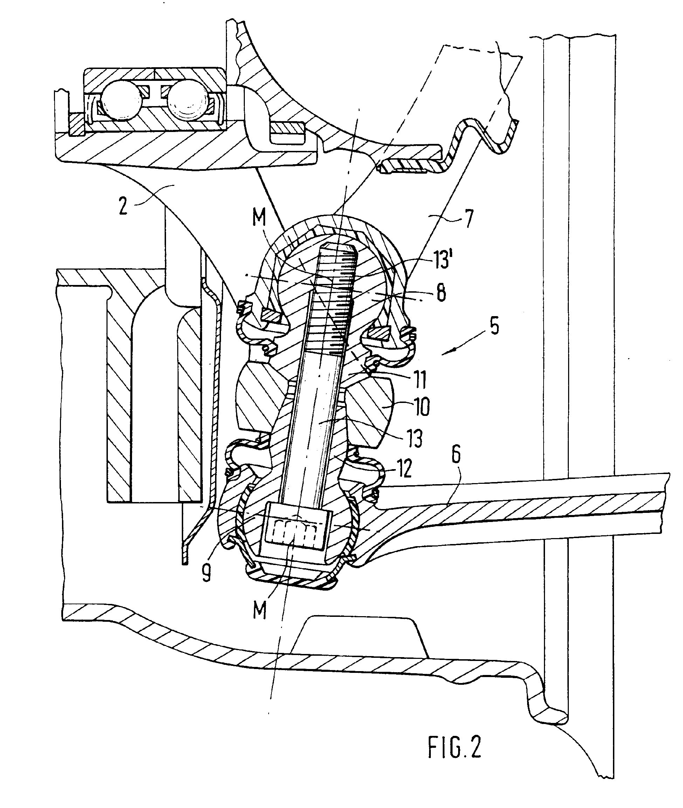

- Fig. 2: eine vergrößerte Darstellung eines Lagerelements zur gelenkigen Abstützung eines - in bezug auf die Raddrehachse - unteren Lenkers und eines Federbeines.

Die Radaufhängung 1 umfaßt einen mit dem Radträger 2 über ein Gelenk 3 verbundenen - in bezug auf die Raddrehachse R - oberen Querlenker 4 sowie einen in einem Lagerelement 5 gehaltenen unteren Lenker 6, in dem gleichzeitig ein Federbein 7 mit seinem unteren Ende abgestützt ist.

Das Lagerelement 5 umfaßt ein erstes stehendes Lager 8 für das Federbein 7 und ein zweites hängendes Lager 9 für den unteren Lenker 6.

Diese Lager 8 und 9 bestehen aus Kugelgelenken und stützen sich in einem Ring 10 des Radträgers 2 ab. Hierzu weisen die Kugelgelenke 8 und 9 Hälse 11 und 12 auf, welche konisch zulaufend ausgeführt sind und in entsprechende Aufnahmen des Ringes 10 eingepaßt werden. Eine Befestigung der Kugelgelenke im Ring 10 erfolgt über einen Bolzen 13, der mit einem Gewinde 13' in das stehende Kugelgelenk 8 einschraubbar ist und sich im Kugelgelenk 9 mit seinem Kopf abstützt.

Die Kugelgelenke 8 und 9 des Lagerelements 5 sind so angeordnet, daß die Schwenkachse 14 des Rades 15 durch die Mittenachse M des Gelenks 3 des oberen Lenkers 4 und durch die Mittenachse der Gelenke 8 und 9 des Lagerelements 5 sowie des Federbeines verläuft. Die Schwenkachse 14 kann durch die nah an die senkrechte Radmittenlängsebene X-X herangerückten Gelenke 3, 8 und 9 nur einen kleinen Störkrafthebelarm mit dem Abstand a bilden. Desweiteren wird durch die Lage der Gelenke 3, 8 und 9 in der Schüssel 17 der Felge 16 eine relativ große Stützbasis mit dem Abstand b erzielt.

Das Gelenk 9 für den unteren Lenker 6 ist kräftemäßig getrennt vom Gelenk 8 für das Federbein, so daß das untere Gelenk frei von Stützkräften des Federbeines 7 gehalten ist und somit leichter dimensioniert werden kann und eine Sicherheit gegen Ausfall gewährleistet ist.

## Patentansprüche

1. Radaufhängung, insbesondere Vorderradaufhängung für ein Kraftfahrzeug, mit einem - in bezug auf die Raddrehachse (R) - oberen und unteren Radführungsglied (4,6), die am Radträger (2) angelenkt sind und diesen um eine Schwenkachse (14) führen, sowie ein Federbein (7) dadurch gekennzeichnet, daß das untere Radführungsglied (6) sowie das Federbein (7) in unteren Gelenken (9 und 8) eines gemeinsamen Lagerelements (5) des Radträgers (2) gelenkig abgestützt sind und daß die durch das radträgerseitige Gelenk (3) des oberen Radführungsgliedes (4) geführte Schwenkachse (14) durch die Mittenachse (M) des oberen Gelenks (3) sowie der unteren Gelenke (8, 9) des Lagerelements (5) verläuft.

2. Radaufhängung nach Anspruch 1, dadurch gekennzeichnet, daß das Lagerelement (5) zwei getrennte Kugelgelenke (8, 9) umfaßt, die mit ihren Hälsen (11 und 12) in einem Stützring (10) des Radträgers (2) über eine Schraube (13) gehalten sind.

3. Radaufhängung nach einem oder mehreren der vorhergehenden Ansprüche, dadurch gekennzeichnet, daß das untere Gelenk (9) des Radführungsgliedes (6) als hängendes Gelenk ausgeführt ist.

4. Radaufhängung nach einem oder mehreren der vorhergehenden Ansprüche, dadurch gekennzeichnet, daß das untere Gelenk (8) des Federbeines (7) als stehendes Gelenk ausgeführt ist.

5. Radaufhängung nach einem oder mehreren der vorhergehenden Ansprüche, dadurch gekennzeichnet, daß die Gelenke (3 und 8, 9) innerhalb der von der Felge (16) gebildete Radschüssel (17) nahe der senkrechten Radmittenlängsebene (X-X) angeordnet sind und eine Stützbasis (b) aufweisen, die annähernd dem Innendurchmesser der Felge (16) entspricht.

## Claims

1. A wheel suspension, in particular a front-wheel suspension for a motor vehicle, having an upper and lower - relative to the wheel rotation axis (R) - wheel guide member (4, 6) articulated on the wheel support (2) and guiding the latter about a pivot axis (14), as well as a telescopic leg (7), **characterized in that** the lower wheel guide member (6) and the telescopic leg (7) are pivotably supported in lower joints (9 and 8) of a common bearing member (5) of the wheel support (2), and the pivot axis (14) passing through the joint (3) of the upper wheel guide member (4) on the wheel support extends through the median axis (M) of the upper joint (3) and of the lower joints (8, 9) of the bearing member (5).

2. A wheel suspension according to Claim 1, **characterized in that** the bearing member (5) comprises two separate ball-and-socket joints (8, 9) held by the necks (11 and 12) thereof in a support ring (10) on the wheel support (2) by way of a bolt (13).

3. A wheel suspension according to one or more of the preceding Claims, **characterized** **in that** the lower joint (9) of the wheel guide member (6) is constructed in the form of a suspended joint.

4. A wheel suspension according to one or more of the preceding Claims, **characterized** **in that** the lower joint (8) of the telescopic leg (7) is constructed in the form of a stationary joint.

5. A wheel suspension according to one or more of the preceding Claims, **characterized** **in that** the joints (3 and 8, 9) are arranged inside the wheel dish (17) formed by the rim (16) close to the vertical median longitudinal plane (X-X) of the wheel and have a support base (b) corresponding substantially to the internal diameter of the rim (16).

## Revendications

1. Suspension de roue, en particulier suspension de roue avant d'un véhicule automobile, comportant un organe de guidage de roue (4, 6) supérieur et inférieur - par rapport à l'axe de rotation de la roue (R) - qui s'articule sur le support de roue (2) et guide celui-ci autour d'un axe de pivotement (14), ainsi qu'une jambe de force à ressort (7), caractérisée en ce que l'organe de guidage de roue (6) inférieur ainsi que la jambe de force à ressort (7) sont soutenus articulés dans des articulations inférieures (9 et 8) d'un élément d'appui (5) commun du support de roue (2) et en ce que l'axe de pivotement (14), guidé par l'articulation (3) côté support de roue de l'organe de guidage de roue (4) supérieur, passe par l'axe médian (M) de l'articulation supérieure (3) ainsi que des articulations inférieures (8, 9) de l'élément d'appui (5).

2. Suspension de roue selon la revendication 1, caractérisée en ce que l'élément d'appui (5) comporte deux joints sphériques (8, 9) séparés, qui sont maintenus, par l'intermédiaire d'une vis (13), avec leurs cols (11 et 12) dans un anneau d'appui (10) du support de roue (2).

3. Suspension de roue selon une ou plusieurs des revendications précédentes, caractérisée en ce que l'articulation (9) inférieure de l'organe de guidage de roue (6) est une articulation suspendue.

4. Suspension de roue selon une ou plusieurs des revendications précédentes, caractérisée en ce que l'articulation inférieure (8) de la jambe de force à ressort (7) est une articulation immobilisée.

5. Suspension de roue selon une ou plusieurs des revendications précédentes, caractérisée en ce que les articulations (3 et 8, 9) se trouvent à l'intérieur du disque de roue (17), formé par la jante (16), à proximité du plan médian longitudinal (X-X) vertical de la roue et présentent une base d'appui (b) qui correspond à peu près au diamètre intérieur de la jante (16).
